Europäisches Patentamt

European Patent Office

Office européen des brevets

(19)

(11) Numéro de publication: **0 099 284**
**B2**

(12) **NOUVEAU FASCICULE DE BREVET EUROPEEN**

(45) Date de publication du nouveau fascicule du brevet:
**22.03.89**

(51) Int. Cl.⁴: **C 08 F 10/00, C 08 F 4/02**

(21) Numéro de dépôt: **83401220.5**

(22) Date de dépôt: **14.06.83**

(54) Procédé pour la préparation de supports de catalyseurs pour la polymérisation des alpha-oléfines et supports obtenus.

(30) Priorité: **24.06.82 FR 8211054**

(43) Date de publication de la demande:
**25.01.84 Bulletin 84/4**

(45) Mention de la délivrance du brevet:
**09.10.85 Bulletin 85/41**

(45) Mention de la décision concernant l'opposition:
**22.03.89 Bulletin 89/12**

(84) Etats contractants désignés:
**AT BE DE FR GB IT NL SE**

(56) Documents cités:
**EP-B- 0 015 048**
**EP-B- 0 098 196**
**EP-B- 0 099 772**
**EP-B- 0 099 773**
**EP-B- 0 099 774**
**DE-A- 3 012 272**
**DE-A- 3 012 276**
**FR-A- 2 439 795**
**GB-A- 1 434 543**
**GB-A- 1 550 195**

**Le dossier contient des informations techniques présentées postérieurement au dépôt de la demande et ne figurant pas dans le présent fascicule.**

(73) Titulaire: **BP Chimie Société Anonyme, Tour Neptune - La Défense 1 20, place de Seine, F-92400 Courbevoie (FR)**

(72) Inventeur: **Bailly, Jean Claude, Les Platanes rue E. Amavet, F-13500 Martigues (FR)**
Inventeur: **Collomb, Joelle, Les Platanes 2 Bd. A. Allais, F-13014 Marseille (FR)**

(74) Mandataire: **Patentanwälte Beetz sen. - Beetz jun. Timpe - Siegfried - Schmitt-Fumian, Steinsdorfstrasse 10, D-8000 München 22 (DE)**

## Description

La présente invention concerne des supports constitués essentiellement de chlorure de magnésium destinés à la préparation de catalyseurs de polymérisation et de copolymérisation des alpha-oléfines, ainsi qu'un procédé de préparation de ces supports.

On sait que les catalyseurs de polymérisation des alpha-oléfines, dits Ziegler-Natta, sont obtenus par la combinaison de composés métalliques de transition appartenant aux groupes IV, V ou VI de la Classification Périodique des éléments avec des composés organométalliques des groupes I à III de cette Classification.

On sait que les propriétés de ces catalyseurs peuvent être améliorées, si ledit composé métallique de transition est utilisé avec un composé minéral solide. Ce composé minéral solide peut être coprécipité avec ledit composé métallique de transition ou peut être employé comme support dudit composé métallique de transition.

Comme composé minéral solide utilisable comme support, on peut mentionner, par exemple, les oxydes de magnésium et de titane, le silicate d'aluminium, le carbonate de magnésium et le chlorure de magnésium.

Dans cette technique, où le composé minéral solide est utilisé comme support, il est essentiel que ce support présente un ensemble de propriétés spécifiques de façon que le catalyseur lui-même soit à la fois reproductible, aisément manipulable, susceptible d'un haut rendement, éventuellement stéréospécifique. C'est pourquoi de nombreux travaux ont porté sur des procédés de préparation de ces supports.

Dans le cas plus particulier où le support est du chlorure de magnésium, on a proposé divers procédés de préparation. On a par exemple décrit depuis longtemps la préparation de chlorure de magnésium anhydre à partir d'un composé organomagnésien; il est en effet très connu en chimie organique que la réaction d'un composé organomagnésien avec un composé halogéné minéral ou organique ou organoaluminique donne naissance à de petites particules de chlorure de magnésium. On a également décrit la pulvérisation-déshydratation d'un chlorure de magnésium hydrate, qui conduit, cependant, à un support contenant une quantité d'eau de cristallisation comprise entre 0,5 et 3,5 moles d'eau par moles de MgCl (GB-A 1 426 563). On a enfin décrit la réalisation de broyage de particules de chlorure de magnésium, éventuellement en présence soit de réactif, soit d'un composé du métal de transition (DE-A 3 012 272 et 3 012 276).

La présente invention concerne un support de catalysateurs sous forme de particules opinéroïdiques à base de chlorure de magnésium (MgCl$_2$) de granulométrie contrôlée, qui sont avantageusement utilisables pour la fabrication de catalyseurs de polymérisation alpha-oléfines, et un procédé pour leur préparation.

Ces particules peuvent être obtenues par réaction, connue en elle-même, de précipitation dans un milieu d'hydrocarbure liquide, d'un complexe d'addition Mg/Al par un chlorure d'alcoyle, mais en respectant les conditions suivantes:

le complexe d'addition Mg/Al utilisé est un dérivé de formule $R_1MgR_2, xAl(R_3)_3$, dans laquelle $R_1$, $R_2$ et $R_3$ sont des radicaux alcoyle ayant de 2 à 12 atomes de carbone, et x est compris entre 0,001 et 10 et, de préférence, compris entre 0,01 et 2.

En outre, on utilise un chlorure d'alcoyle de formule $R_4Cl$ dans laquelle $R_4$ est un alcoyle secondaire ou de préférence tertiaire, ayant de 3 à 12 atomes de carbone, le rapport molaire entre ce composé organique chloré et le dérivé d'organomagnésien étant compris entre $1,5 (1+3/2 \cdot x)$ et $2,5 (1+3/2 \cdot x)$, la réaction est effectuée en présence d'un composé donneur d'électron comprenant au moins un atome d'oxygène, de soufre, d'azote et/ou de phosphore, en quantité telle que le rapport molaire entre ce composé donneur d'électron et le dérivé d'organomagnésien est compris entre 0,01 et 2 et, de préférence, entre 0,01 et 1,

la réaction a lieu sous agitation, au sein d'un hydrocarbure liquide, à une température comprise entre 5°C et 80°C.

Le complexe d'addition Mg/Al utilisé doit en effet comporter un composé organomagnésien de formule $R_1MgR_2$ et une quantité suffisante d'un composé alcoylaluminium de formule $Al(R_3)_3$, dans lesquelles $R_1$, $R_2$ et $R_3$ sont des radicaux alcoyle identiques ou différents, ayant de 2 à 12 atomes de carbone. On sait, en effet, qu'entre le composé $R_1MgR_2$ et le composé $Al(R_3)_3$, il se forme un complexe d'addition; il conviendra donc d'adapter les quantités relatives de $R_1MgR_2$ et de $Al(R_3)_3$ pour d'une part atteindre une solubilité suffisante du complexe d'addition dans les conditions réactionnelles utilisées et d'autre part diminuer la viscosité du milieu de réaction.

Dans la formule $R_4Cl$ du chlorure d'alcoyle, $R_4$ est un radical alcoyle secondaire ou de préférence tertiaire; les radicaux alcoyle $R_4$ primaires ne permettent pas l'obtention d'un résultat convenable.

Le rapport molaire entre $R_4Cl$ et $R_1MgR_2 xAl(R_3)_3$ doit être compris entre $1,5 (1+3/2x)$ et $2,5 (1+3/2x)$. Si ce rapport molaire est inférieur à $1,5 (1+3/2x)$, le rendement de la réaction diminue de façon notable. D'autre part, il est apparu que lorsque ce rapport molaire augmente de $1,5 (1+3/2x)$ à $2 (1+3/2x)$, la densité des particules de chlorure de magnésium obtenues selon la présente invention décroît légèrement, puis que cette densité décroît rapidement lorsque ce rapport molaire augmente au-delà de $2 (1+3/2x)$. Or l'expérience a montré que dans certains cas, il est intéressant d'utiliser un catalyseur préparé à partir de particules de chlorure de magnésium ayant une densité relativement élevée. Il est alors préférable de respecter un rapport molaire du chlorure d'alcoyle et du complexe d'addition Mg/Al inférieur à $2 (1+3/2x)$ et plus particulièrement compris entre $1,85 (1+3/2x)$ et $1,95 (1+3/2x)$.

Dans ces conditions, on constate que le milieu réactionnel contient, en fonction de la nature et de la quantité du composé donneur d'électron mis en œuvre, des produits comportant des liaisons Mg-C, solubles dans le milieu d'hydrocarbure liquide. On constate également que les particules obtenues contiennent généralement, après plusieurs lavages et extractions à l'aide d'hydrocarbure liquide, des produits comportant au moins une liaison Mg-C. De tels supports sont alors particulièrement utiles pour la préparation de catalyseurs destinés à la polymérisation ou la copolymérisation de l'éthylène.

L'expérience a montré également que le rapport molaire $R_4Cl/R_1MgR_2, xAl(R_3)_3$ peut être égal ou supérieur à 1,95 (1+3/2x), et, de préférence, compris entre 2(1+3/2x) et 2,2(1+3/2x), et que, dans ce cas, les particules obtenues ne contiennent pas de produits ayant au moins une liaison Mg-C. Elles constituent des supports particulièrement utiles pour la préparation de catalyseurs destinés à la polymérisation ou la copolymérisation du propylène.

Si l'on a déjà préconisé dans l'art antérieur la préparation de supports de catalyseurs par réaction de dérivés d'organomagnésien tels que définis ci-dessus avec un composé organique chloré tel que ci-dessus, on n'a jamais indiqué qu'il était souhaitable de réaliser cette réaction en présence d'un composé donneur d'électrons. Or, cette présence joue un rôle essentiel pour l'obtention d'un support présentant une forme et des propriétés intéressantes. Le composé donneur d'électrons utilisé est un composé organique connu comme tel, ou comme base de Lewis, comprenant en particulier au moins un atome d'oxygène, de soufre, d'azote et/ou de phosphore. Le composé donneur d'électrons peut être choisi parmi une grande variété de produits, tels que par exemple les amines, les amides, les phosphines, les sulfoxydes, les sulfones ou les éthers. La quantité du composé donneur d'électrons à mettre en œuvre pendant la réaction dépend en partie de la nature et de la quantité du complexe d'addition Mg/Al ainsi que de la nature du composé donneur d'électrons, notamment de son pouvoir complexant. Ainsi, si l'on choisit un composé donneur d'électrons de pouvoir complexant élevé, tel que, par exemple, l'hexaméthylphosphorotriamide (HMPA), ce composé doit être présent en une quantité molaire d'au moins environ 0,01 mole par mole de $R_1MgR_2, xAl(R_3)_3$ mis en œuvre. Par contre, dans le cas où l'on utilise un composé donneur d'électrons de faible pouvoir complexant, tel que, par exemple, un éther, la quantité utilisée doit être d'au moins environ 0,03 moles de donneur d'électrons par mole de $R_1MgR_2, xAl(R_3)_3$ mis en œuvre. Si la quantité de donneur d'électrons est inférieure à l'une de ces limites, on constate que les particules obtenues présentent des formes moins régulières et une distribution granulométrique relativement large. Si, par contre, la quantité de composé donneur d'électrons est trop élevée, en particulier égale ou supérieure à environ 2 moles par mole de $R_1MgR_2, xAl(R_3)_3$ mis en œuvre, on constate que la réaction se déroule moins régulièrement, notamment lors de son démarrage, ce qui conduit à des particules de forme et de distribution granulométrique non désirées.

Des résultats particulièrement intéressants sont obtenus, lorsqu'on utilise comme composé donneur d'électrons, un éther de formule $R_5OR_6$, dans laquelle $R_5$ et $R_6$ sont des radicaux alcoyle identiques ou différents ayant de 1 à 12 atomes de carbone, en quantité telle que le rapport molaire entre cet éther et le complexe d'addition Mg/Al est compris entre 0,03 et 2, et de préférence compris entre 0,03 et 1. Dans le cas d'utilisation d'un éther, il est préférable que la réaction effectuée en milieu agité, au sein d'un hydrocarbure liquide, soit réalisée à une température comprise entre 35 et 80°C.

La mise en œuvre du composé donneur d'électrons peut être réalisée de diverses façons qui dépendent en partie de la nature même du composé donneur d'électrons et de la nature de $R_1MgR_2, xAl(R_3)_3$. On peut, par exemple dans le cas de composé donneur d'électrons de pouvoir complexant élevé, ajouter ledit composé donneur d'électrons en totalité à $R_1MgR_2, xAl(R_3)_3$, ou de préférence, à $R_4Cl$ avant le démarrage de la réaction; mais on peut également répartir le composé donneur d'électrons entre $R_1MgR_2, xAl(R_3)_3$ et $R_4Cl$. Si l'on utilise un composé donneur d'électrons de faible pouvoir complexant tel qu'un éther, ce dernier peut être de préférence introduit soit en totalité avec $R_1MgR_2, xAl(R_3)_3$, soit réparti entre $R_1MgR_2, xAl(R_3)_3$ et $R_4Cl$; dans ce dernier cas, il convient de préférence d'admettre, dans le milieu d'hydrocarbure liquide et avant l'introduction des réactifs, au moins 0,03 mole du composé donneur d'électrons par mole de $R_1MgR_2, xAl(R_3)_3$ mis en œuvre.

La réaction entre $R_1MgR_2, xAl(R_3)_3$ et $R_4Cl$ donne naissance à un produit solide; il s'agit donc d'une précipitation; le spécialiste sait que, dans ce cas, des facteurs physiques tels que la viscosité du milieu, le mode et la vitesse d'agitation, les conditions de mise en œuvre des réactifs, la durée de réaction peuvent, toutes choses égales par ailleurs, jouer un rôle important dans la forme, la structure, la taille et la distribution granulométrique des particules précitées.

Il en est bien évidemment ainsi dans la présente invention et c'est pourquoi on indique que:

a) si l'on désire obtenir un support de distribution granulométrique très étroite, définie par le rapport du diamètre moyen en masse, Dm, au diamètre moyen en nombre, Dn, compris entre environ 1,1 et 1,5 il est souhaitable que:

la réaction soit effectuée en introduisant progressivement $R_4Cl$ dans le milieu d'hydrocarbure liquide contenant $R_1MgR_2, xAl(R_3)_3$, la réaction soit effectuée en présence d'un composé donneur d'électrons en quantité telle que le rapport molaire entre ledit composé donneur d'électrons et $R_1MgR_2, xAl(R_3)_3$ soit inférieur à 1,

la réaction soit effectuée dans un hydrocarbure liquide agité à une vitesse constante pendant toute la durée de la précipitation, et, toutes choses égales par ailleurs, la réaction soit relativement lente, de l'ordre d'au moins une heure, de façon à permettre une organisation convenable du produit solide formé.

b) Si l'on désire obtenir un support de distribution granulométrique moins étroite que précédemment, telle que le rapport Dm/Dn soit compris entre environ 1,5 et 3, et en particulier compris entre 1,5 et 2,5, il est souhaitable que:

introduisant progressivement $R_4Cl$ dans le milieu d'hydrocarbure liquide contenant $R_1MgR_2$, $xAl(R_3)_3$, la vitesse d'agitation soit modifiée à un instant tel que la quantité de $R_4Cl$ introduite dans le milieu réactionnel corresponde à un rapport molaire $R_4Cl/R_1MgR_2$, $xAl(R_3)_3$ égal ou inférieur à 0,25 ou que la réaction soit effectuée en introduisant dans une première étape, d'une façon progressive et simultanée $R_4Cl$ et $R_1M$-$gR_2^5$, $xAl(R_3)_3$ dans le milieu d'hydrocarbure liquide en quantités telles qu'au maximum 50% des quantités de chacun des réactifs mis en œuvre soient introduits, puis, dans une seconde étape, en introduisant d'abord rapidement la quantité restante de $R_1MgR_2$, $xAl(R_3)_3$ et ensuite progressivement la quantité restante de $R_4Cl$ dans le milieu réactionnel et que la vitesse d'agitation soit éventuellement modifiée à un instant quelconque de la première étape, citée ci-dessus, d'addition progressive et simultanée de $R_4Cl$ et $R_1MgR_2$, $xAl(R_3)_3$ dans le milieu d'hydrocarbure liquide.

Lorsqu'on met en œuvre le procédé tel que décrit ci-dessus, on réalise un support constitué de particules contenant essentiellement du chlorure de magnésium et d'aluminium et un donneur d'électrons et qui présentent les propriétés suivantes:

les particules ont une forme sphéroïdale, définie par le fait que, si D et d sont les grands et petits axes de particules, $D/d \leq 1,3$;

les particules ont un diamètre moyen en masse réglable à volonté et compris entre 10 et 100 microns environ;

la distribution granulométrique de ces particules est telle que le rapport Dm/Dn du diamètre moyen en masse au diamètre moyen en nombre est controlé à volonté et inférieur ou égal à 3 et, en particulier compris entre 1,1 et 2,5; on constate en outre l'absence pratiquement totale de grosses particules de diamètre supérieur à 2 x Dm et de fines particules de diamètre inférieur à 0,2 Dm; la distribution granulométrique peut, en outre, être telle que plus de 90% en poids des particules d'un même lot sont compris dans la fourchette Dm ± 10%;

les particules peuvent présenter une surface légèrement bosselée, telle que celle d'une framboise, mais présentent, de préférence, une surface très lisse; la surface spécifique des particules est d'environ 20 à 60 m²/g (BET);

la densité des particules est réglée à volonté entre 1,2 et 2,2 et dépend en particulier de la proportion des réactifs mis en œuvre; la composition chimique du support est la suivante:

a) le support contient un chlorure d'aluminium en quantité telle que le rapport atomique Al/Mg est compris entre 0,001 et 0,1, ce chlorure d'aluminium pouvant être le trichlorure d'aluminium et/ou un chlorure d'alcoylaluminium, tel que, par exemple, un chlorure de dialcoylaluminium;

b) dans le but de préparer des catalyseurs destinés à la polymérisation et copolymérisation de l'éthylène, le rapport atomique Cl/Mg du support est légèrement inférieur à 2 + (3 Al/Mg), le support contient à la fois des produits à liaisons Mg-C et un composé donneur d'électrons, en faible proportion;

c) dans le but de préparer des catalyseurs destinés à la polymérisation et la copolymérisation du propylène, le rapport atomique Cl/Mg du support est sensiblement égal à 2 + (3 Al/Mg).

Les supports à base de chlorure de magnésium, qui peuvent être préparés selon la présente invention, sont utilisés pour la préparation de catalyseurs de polymérisation ou de copolymérisation d'alpha-oléfines.

Cette préparation de catalyseurs peut s'effectuer par tous moyens connus consistant à déposer, sur la surface du support, un produit actif qui est un composé tel qu'un chlorure d'un métal de transition des groupes IV, V et VI de la Classification Périodique des éléments, de préférence le titane. Ce composé métallique pourra être adapté, de façon connue, à la polymérisation de l'alpha-oléfine que l'on voudra réaliser.

Il est important que les supports selon l'invention présentent un ensemble de propriétés physicochimiques et mécaniques spécialement adaptées à la préparation de poudres de polymères et/ou copolymères présentant une densité apparente élevée, ce qui se relève intéressant sur le plan technique, aussi bien pour des procédés de polymérisation en suspension dans un hydrocarbure que de polymérisation sans solvant, comme par exemple en lit fluidisé.

Méthode de détermination des diamètres moyens de masse (Dm) et en nombre (Dn) des particules de support de chlorure de magnésium.

Selon l'invention, les diamètres moyens en masse (Dm) et en nombre (Dn) des particules de support de chlorure de magnésium sont mesurés à partir d'observations microscopiques, au moyen de l'analyseur d'images OPTOMAX (Micro Measurements Ltd., Grande-Bretagne).

Le principe de la mesure consiste à obtenir à partir de l'étude expérimentale par microscopie optique d'un ensemble de particules une table d'effectifs où est donné le nombre ($n_i$) de particules appartenant à chaque classe (i) étant caractérisée par un diamètre intermédiaire ($d_i$), compris entre les limites de ladite classe. Suivant la norme française homologuée NF X 11-630 de Juin 1981, Dm et Dn sont fournis par les formules suivantes:

diamètre moyen en masse: $Dm = \dfrac{\Sigma ni(di)^3\, di}{\Sigma ni(di)^3}$;

diamètre moyen en nombre: $Dn = \dfrac{\Sigma ni \cdot di}{\Sigma ni}$.

Le rapport Dm/Dn caractérise la distribution granulométrique; il est parfois appelé «largeur de distribution granulométrique».

La mesure par l'analyseur d'image OPTOMAX est réalisée au moyen d'un microscope inversé qui permet l'examen des suspensions de particules avec un grossissement compris entre 16 et 200 fois. Une caméra de télévision reprend les images données par le microscope inversé et les transmet à un ordinateur qui analyse les images ligne par ligne et point par point sur chaque ligne, en vue de déterminer les dimensions ou diamètres des particules, puis de les classer.

Les exemples non limitatifs suivants illustrent l'invention.

Exemple 1

Dans un réacteur en verre de 1 litre, muni d'un système d'agitation tournant constamment à 750 tours par minute, on introduit sous atmosphère d'azote 200 millimoles de t-butyle-s-butylmagnésium et 33,4 millimoles de triéthylaluminium, les deux composés étant sous forme de solutions molaires dans le n-hexane. On chauffe ce mélange à 80°C, pendant 2 heures. Il se forme ainsi un complexe d'addition de formule Mg $(C_4H_9)_2$ 0,17 $Al(C_2H_5)_3$. Après refroidissement vers 50°C, on introduit dans le réacteur 200 millimoles d'éther diisoamylique; après homogénéisation, on introduit progressivement en 2 heures, en maintenant le milieu réactionnel à 50°C, 550 millimoles de chlorure de t-butyle. On maintient le milieu pendant encore 2 heures à 50°C, puis on lave le précipité formé cinq fois avec du n-hexane. La quantité de chlorure de t-butyle introduite correspondant à la quantité théorique nécessaire à la transformation de la totalité du complexe d'addition Mg/Al en $MgCl_2$ et du composé organoaluminique en $AlCl_3$. A l'examen microscopique, le précipité formé est constitué de particules sphéroïdiques (le rapport moyen entre grands et petits axes, D/d des particules est égal à 1,23), ayant une distribution granulométrique telle que Dm/Dn = 1,5 et un diamètre moyen en masse (Dm) égal à 25 microns.

Le produit obtenu a la composition chimique suivante par atome-gramme de magnésium: 2,1 atome-grammes de chlore, 0,04 atome-gramme d'aluminium, 0,05 équivalent-gramme de liaisons Mg-C et 0,10 mole d'éther diisoamylique.

Exemple 2

La préparation est identique à l'exemple 1, excepté le fait que la vitesse d'agitation est constamment fixée à 500 tours par minute. A l'examen microscopique, le précipité formé est constitué de particules sphéroïdiques, de distribution granulométrique telle que Dm/Dn = 1,2. avec Dm = 50 microns; on trouve, en outre, que plus de 90 % en poids des particules ont un diamètre moyen compris entre 45 et 55 microns. Le produit obtenu a la composition chimique suivante par atome-gramme de magnésium: 2,1 atome-grammes de chlore, 0,04 atome-gramme d'aluminium, 0,05 équivalent-gramme de liaison Mg-C et 0,10 mole d'éther diisoamylique.

Exemple 3

Dans un réacteur de 5 litres en acier inoxydable, muni d'un système d'agitation tournant constamment à 600 tours par minute, on introduit 1 720 ml d'un solution de butyloctylmagnésium dans le n-hexane contenant 1 500 milliatome-grammes de magnésium de 1 500 ml d'une solution molaire de triéthylaluminium dans le n-hexane. Le milieu réactionnel est chauffé à 80°C, puis maintenu à cette température pendant 2 heures. Il se forme ainsi un complexe d'addition entre le composé organomagnésien et le composé organoaluminique, contenant une mole de triéthylaluminium par atome-gramme de magnésium. Après refroidissement à 50°C, on ajoute au milieu réactionnel 500 ml de n-hexane et 15,6 ml (75 millimoles) d'éther diisoamylique et on introduit progressivement en 3 heures 505 ml d'un mélange contenant 3 600 millimoles de chlorure de t-butyle et 450 millimoles d'éther diisoamylique. A la fin de cette addition, le milieu est maintenu sous agitation pendant 2 heures et demie à 50°C. Le précipité obtenu est lavé cinq fois avec le n-hexane.

Le produit solide obtenu a la composition chimique suivante par atome-gramme de magnésium: 2,08 atome-gramme de chlore, 0,05 atome-grammes d'aluminium, 0,07 équivalent-gramme de liaisons Mg-C et 0,07 mole d'éther diisoamylique. A l'examen microscopique, le produit solide se présente sous forme de particules sphéroïdiques (le rapport moyen entre grand et petit axe, D/d, des particules est égal à 1,15), ayant une distribution granulométrique telle que Dm/Dn = 1,1 et Dm = 34 microns; on trouve moins de 0,1 % en poids de particules de diamètre inférieur à 4 microns; les particules présentent une surface lisse; la densité du produit est égale à 1,9 et sa surface spécifique à 42 m²/g.

Exemple 4

Dans un réacteur de 5 litres en acier inoxydable, muni d'un système d'agitation tournant à 400 tours par minute, on introduit 1 720 ml d'une solution de butyloctylmagnésium dans le n-hexane contenant 1 500 milliatome-grammes de magnésium et 250 ml d'une solution molaire de triétylaluminium dans le n-hexane. Le milieu réactionnel est chauffé à 80°C et maintenu pendant 2 heures sous la même agitation à cette température. Il se forme ainsi un complexe d'addition entre le composé organomagnésien et le composé organoaluminique, contenant 0,17 mole de triéthylaluminium par atome-gramme de magnésium. On refroidit à la température ambiante (20°C) la solution de complexe d'addition qui est isolée en dehors du réacteur sous atmosphère d'azote.

Dans ce même réacteur, nettoyé avec du n-hexane, on introduit 500 ml de n-hexane et 9,4 ml (45 millimoles) d'éther diisoamylique. Le réacteur est chauffé à 50°C et on y introduit, progressivement et simultanément en 1 heure, d'une part 657 ml de la solution du complexe d'addition préparée précédemment, et, d'autre part 168 ml d'un mélange comprenant 1 200 millimoles de chlorure de t-butyle et 150 millimoles d'éther diisoamylique, la vitesse du système d'agitation étant maintenue à 400 tours par minute pendant la première demi-heure d'introduction progressive et simultanée des réactifs, puis brusquement fixée à 800 tours par minute. Après introduction progressive et simultanée des réactifs, on maintient la même agitation à 800 tours par minute et on introduit dans le milieu réactionnel en une seule fois et rapidement 1 313 ml de la solution du complexe d'addition préparée précédemment, puis progressivement, pendant 2 heures, 337 ml d'un mélange contenant 2 400 millimoles de chlorure de t-butyle et 300 millimoles d'éther diisoamylique. La vitesse d'agitation est alors réduite à 400 tours par minute, et le mélange est maintenu pendant 2 heures et demie à 50°C.

Le produit solide est lavé cinq fois avec le n-hexane. Il a la composition suivante par atome-gramme de magnésium: 2,10 atome-grammes de chlore, 0,05 atome-gramme d'aluminium, 0,05 équivalent-gramme de liaisons Mg-C et 0,03 mole d'éther diisoamylique. A l'examen microscopique, le support solide se présente sous forme de particules sphéroïdiques, de distribution granulométrique telle que Dm/Dn = 2,5, avec Dm = 20 microns; les particules sphéroïdiques présentent une surface lisse et sans aspérités; la densité du produit est égale à 1,95.

**Revendications**

1. Supports spheroïdiques de catalyseurs pour la polymérisation et la copolymérisation des alphaoléfines, notamment de l'éthylène et du propylène, constitués de particules essentiellement consistant de chlorures de magnésium et d'aluminium en quantité telle que le rapport atomique Al/Mg est compris entre 0,001 et 0,1, ayant un diamètre moyen en masse Dm compris entre 10 et 100 microns et le rapport Dm/Dn du diamètre moyen en masse, Dm, au diamètre moyen en nombre, Dn, des particules est inférieur ou égal à 3, pouvant être obtenus par précipitation dans un milieu d'hydrocarbure liquide d'un complexe d'addition Mg/Al de formule $R_1MgR_2$, $xAl(R_3)_3$, dans laquelle $R_1$, $R_2$ et $R_3$ sont des radicaux alcoyle identiques ou différents ayant de 2 à 12 atomes de carbone et x compris entre 0,001 et 10 et d'un chlorure d'alcoyle, cette précipitation étant effectuée dans les conditions suivantes:
– on utilise un chlorure d'alcoyle de formule $R_4Cl$, dans laquelle $R_4$ est un radical alcoyle secondaire ou tertiaire, ayant de 3 à 12 atomes de carbone, le rapport molaire entre ce chlorure d'alcoyle et le complexe d'addition étant compris entre $1,5(1+3/2\cdot x)$ et $2,5(1+3/2\cdot x)$
– la précipitation est effectuée en présence d'un composé donneur d'électron, comprenant au moins un atome d'oxygène, de soufre, d'azote et/ou de phosphore, en quantité telle que le rapport molaire entre ce composé donneur d'électron et le complexe d'addition Mg/Al est compris entre 0,01 et 2, et de préférence entre 0,01 et 1,
– la précipitation a lieu sous agitation à une température comprise entre 5 et 80°C.

2. Supports selon la revendication 1, caractérisés en ce que le rapport Dm/Dn des particules est compris entre 1,1 et 2,5.

3. Supports selon la revendication 1, caractérisés en ce que le rapport Dm/Dn des particules est compris entre 1,1 et 1,5.

4. Supports selon la revendication 1, caractérisés en ce que le rapport Dm/Dn des particules est compris entre 1,5 et 2,5.

5. Supports selon la revendication 1, caractérisés en ce que plus de 90 % en masse des particules d'un même lot sont compris dans la fourchette Dm ±10 %.

6. Supports selon la revendication 1, caractérisés en ce que les particules présentent une surface lisse et une surface spécifique d'environ de 20 à 60 m²/g (BET).

7. Supports selon la revendication 1, caractérisés en ce qu'ils comportent des liaisons Mg-C, et en ce que leur densité est comprise entre 1,6 et 2,2.

8. Supports selon la revendication 1, caractérisés en ce qu'ils ne comportent pas de liaisons Mg-C, et en ce que leur densité est comprise entre 1,2 et 2,1.

9. Procédé de préparation de supports de catalyseurs selon la revendication 1, par précipitation dans un milieu d'hydrocarbure liquide d'un complexe d'addition Mg/Al de formule $R_1MgR_2$, $\times$ Al $(R_3)_3$, dans laquelle $R_1$, $R_2$ et $R_3$ sont des radicaux alcoyle identiques ou différents ayant de 2 à 12 atomes de carbone et x compris entre 0,001 et 10 et d'un chlorure d'alcoyle, caractérisé en ce que ladite réaction est effectuée dans les conditions suivantes:
– on utilise un chlorure d'alcoyle de formule $R_4Cl$, dans laquelle $R_4$ est un radical alcoyle secondaire ou tertiaire, ayant de 3 à 12 atomes de carbone, le rapport molaire entre le chlorure d'alcoyle et le complexe d'addition Mg/Al étant compris entre $1,5(1+3/2\cdot x)$ et $2,5(1+3/2\cdot x)$,
– la précipitation est effectuée en présence d'un composé donneur d'électrons, comprenant au moins un atome d'oxygène, de soufre, d'azote et/ou de phosphore, en quantité telle que le rapport molaire entre ce composé donneur d'électrons et le complexe d'addition Mg/Al est compris entre 0,01 et 2, et de préférence entre 0,01 et 1,
– la précipitation a lieu sous agitation, à une température comprise entre 5 et 80°C.

10. Procédé selon la revendication 9, caractérisé en ce qu'on utilise comme composé donneur d'électrons un éther aliphatique de formule $R_5OR_6$, dans laquelle $R_5$ et $R_6$ sont des radicaux alcoyle identiques ou différents ayant de 1 à 12 atomes de carbone.

11. Procédé selon la revendication 10, caractérisé en ce que la précipitation est effectuée en utilisant un rapport molaire entre cet éther et le composé d'addition Mg/Al entre 0,03 et 2 et une température comprise entre 35 et 80°C.

12. Procédé selon la revendication 9, caractérisé en ce que la précipitation est réalisée en introduisant progressivement le chlorure d'alcoyle dans le milieu d'hydrocarbure liquide contenant le complexe d'addition Mg/Al.

13. Procédé selon la revendication 9, caractérisé en ce que la précipitation est réalisée sous une agitation constante pendant toute la durée de la précipitation.

14. Procédé selon la revendication 12, caractérisé en ce que la vitesse d'agitation est modifiée à un instant tel que la quantité de chlorure d'alcoyle introduite progressivement dans le milieu d'hydrocarbure liquide contenant le complexe d'addition Mg/Al corresponde à un rapport molaire $R_4Cl/R_1MgR_2$, $xAl(R_3)_3$ inférieur ou égal à 0,25.

15. Procédé selon la revendication 9, caractérisé en ce que la précipitation est réalisée en introduisant, dans une première étape, d'une façon progressive et simultanée le complexe d'addition Mg/Al et le chlorure d'alcoyle dans le milieu d'hydrocarbure liquide, en quantités telles qu'au maximum 50 % des quantités de chacun des réactifs mis en œuvre soient introduits, puis dans une seconde étape, en introduisant d'abord rapidement la quantité restante du complexe d'addition Mg/Al et ensuite progressivement la quantité restante du chlorure d'alcoyle dans le milieu réactionnel.

16. Procédé selon la revendication 15, caractérisé en ce que la précipitation est effectuée en modifiant la vitesse d'agitation à un instant quelconque de l'étape d'introduction progressive et simultanée du complexe d'addition Mg/Al et du chlorure d'alcoyle dans le milieu d'hydrocarbure liquide.

17. Procédé selon la revendication 9, caractérisé en ce que pour la préparation de supports de catalyseurs de polymérisation ou de copolymérisation de l'éthylène ou du propylène on utilise un rapport molaire entre le chlorure d'alcoyle et le complex d'addition compris entre $1,85(1+3/2 \cdot x)$ et $1,95(1+3/2 \cdot x)$.

18. Procédé selon la revendication 9, caractérisé en ce que pour la préparation de supports de catalyseurs de polymérisation ou de copolymérisation du propylène on utilise un rapport molaire entre le chlorure d'alcoyle et le complexe d'addition Mg/Al compris entre $1,95(1+3/2 \cdot x)$ et $2,2(1+3/2 \cdot x)$.

**Claims**

1. Spheroidal supports for catalysts for the polymerisation and copolymerisation of alpha-olefins, particularly ethylene and propylene, consisting of particles essentially composed of magnesium and aluminium chlorides whereby the atomic ratio Al/Mg is comprised between 0,001 and 0,1, the mean diameter by mass Dm is comprised between 10 and 100 microns, and the ratio Dm/Dn of the mean diameter by mass Dm to the mean diameter by number Dn of the particles is less than or equal to 3, obtainable by precipitation of a Mg/Al addition complex of the formula $R_1MgR_2$, $xAl(R_3)_3$, wherein $R_1$, $R_2$ and $R_3$ are identical or different alkyl radicals having 2 to 12 carbon atoms and x is comprised between 0,001 and 10 and an alkyl chloride in a liquid hydrocarbon medium, the precipitation being performed under the following conditions:
- An alkyl chloride of formula $R_4Cl$ is used, wherein $R_4$ is a secondary or tertiary alkyl radical having 3 to 12 carbon atoms, the molar ratio of alkyl chloride and Mg/Al addition complex being comprised between $1,5(1+3/2 \cdot x)$ and $2,5(1+3/2 \cdot x)$;
- the precipitation is carried out in the presence of an electron donor compound comprising at least one oxygen, sulphur, nitrogen and/or phosphorus atom, in such an amount that the molar ratio of electron donor compound and Mg/Al complex is comprised between 0,01 and 2 and preferably between 0,01 and 1;
- the precipitation is carried out with agitation at a temperature comprised between 5 and 80°C.

2. Supports according to claim 1, characterised in that the ratio Dm/Dn of the particles is comprised between 1,1 and 2,5.

3. Supports according to claim 1, characterised in that the ratio Dm/Dn of the particles is comprised between 1,1 and 1,5.

4. Supports according to claim 1, characterised in that the ratio Dm/Dn of the particles is comprised between 1,5 and 2,5.

5. Supports according to claim 1, characterised in that more than 90 per cent by mass of the particles of the same batch are comprised within the range Dm ± 10 %.

6. Supports according to claim 1, characterised in that the particles have a smooth surface and a specific surface area of approximately 20 to 60 m²/g (BET).

7. Supports according to claim 1, characterised in that they comprise Mg-C bonds, and their density is comprised between 1,6 and 2,2.

8. Supports according to claim 1, characterised in that they do not comprise Mg-C bonds, and their density is comprised between 1,2 and 2,1.

9. A process for the preparation of the supports according to claim 1 by precipitation of a Mg/Al addition complex of the formula $R_1MgR_2$, $xAl(R_3)_3$, wherein $R_1$, $R_2$ and $R_3$ are identical or different alkyl radicals having 2 to 12 carbon atoms, and x is comprised between 0,001 and 10, and an alkyl chloride in a liquid hydrocarbon medium, characterised in that said precipitation is performed under the following conditions:
- An alkyl chloride of formula $R_4Cl$ is used, wherein $R_4$ is a secondary or tertiary alkyl radical having 3 to 12 carbon atoms, the molar ratio of alkyl chloride and Mg/Al addition complex being comprised between $1,5(1+3/2 \cdot x)$ and $2,5(1+3/2 \cdot x)$,
- the precipitation is carried out in the presence of an electron donor compound comprising at least one oxygen, sulphur, nitrogen and/or phosphorus atom, in such an amount that the molar ratio of electron donor compound and Mg/Al addition complex is comprised between 0,01 and 2 and preferably between 0,01 and 1;

– the precipitation is carried out with agitation, at a temperature comprised between 5 and 80°C.

10. The process according to claim 9, characterised in that an aliphatic ether of formula $R_5OR_6$ is used as electron donor compound, wherein $R_5$ and $R_6$ are identical or different alkyl radicals having from 1 to 12 carbon atoms.

11. The process according to claim 10, characterised in that the precipitation is carried out using a molar ratio of ether and Mg/Al addition complex between 0,03 and 2 at a temperature comprised between 35 and 80°C.

12. The process according to claim 9, characterised in that the precipitation is performed by gradually introducing the alkyl chloride into the liquid hydrocarbon medium containing the Mg/Al addition complex.

13. The process according to claim 9, characterised in that the precipitation is performed with constant agitation throughout the entire duration of reaction.

14. The process according to claim 12, characterised in that the speed of agitation is modified at an instant when the quantity of the alkyl chloride gradually introduced into the liquid hydrocarbon medium containing the Mg/Al addition complex corresponds to a molar ratio $R_4Cl/R_1MgR_2, xAl(R_3)_3$ of less than or equal to 0,25.

15. The process according to claim 9, characterised in that the precipitation is performed by gradually and simultaneously introducing in a first stage the alkyl chloride and the Mg/Al addition complex into the liquid hydrocarbon medium in quantities such that at most 50 % of the employed amounts of each of the reactants are introduced, and then, in a second stage, first of all rapidly introducing the remaining quantity of Mg/Al addition complex and then gradually introducing the remaining quantity of the alkyl chloride into the reaction medium.

16. The process according to claim 15, characterised in that the precipitation is performed by modifying the speed of agitation at any moment in the stage of gradual and simultaneous introduction of Mg/Al addition complex and alkyl chloride into the liquid hydrocarbon medium.

17. The process according to claim 9, characterised in that for the preparation of supports for catalysts for the polymerisation or copolymerisation of ethylene or propylene a molar ratio of alkyl chloride and Mg/Al addition complex between $1,85(1+3/2 \cdot x)$ and $1,95 (1+3/2 \cdot x)$ is used.

18. The process according to claim 9, characterised in that for the preparation of supports for catalysts for the polymerisation or copolymerisation of propylene a molar ratio of alkyl chloride and Mg/Al addition complex between $1,95(1+3/2 \cdot x)$ and $2,2(1+3/2 \cdot x)$ is used.

**Patentansprüche**

1. Sphäroidale Träger für Katalysatoren zur Polymerisation und Copolymerisation von α-Olefinen, insbesondere von Ethylen und Propylen, aus Teilchen, die im wesentlichen aus Chloriden von Magnesium und Aluminium bestehen, wobei das Atomverhältnis Al/Mg zwischen 0,001 und 0,1 und der mittlere massenbezogene Durchmesser Dm der Teilchen zwischen 10 und 100 µm liegen und das Verhältnis Dm/Dn des mittleren massebezogenen Durchmessers Dm zum mittleren anzahlbezogenen Durchmesser Dn der Teilchen $\leq 3$ ist, erhältlich durch Fällung eines Mg/Al-Additionskomplexes der Formel $R_1MgR_2, xAl(R_3)_3$, in der $R_1$, $R_2$ und $R_3$ gleiche oder verschiedene Alkylreste mit 2 bis 12 Kohlenstoffatomen darstellen und x zwischen 0,001 und 10 liegt, in einem flüssigen Kohlenwasserstoffmilieu mit einem Alkylchlorid, wobei diese Fällung unter folgenden Bedingungen durchgeführt wird:

– Es wird ein Alkylchlorid der Formel $R_4Cl$ eingesetzt, in der $R_4$ ein sekundärer oder ein tertiärer Alkylrest mit 3 bis 12 Kohlenstoffatomen ist, wobei das Molverhältnis von Alkylchlorid und Mg/Al-Additionskomplex zwischen $1,5(1+3/2 \cdot x)$ und $2,5(1+3/2 \cdot x)$ liegt;

– die Fällung wird in Anwesenheit einer Elektronendonorverbindung durchgeführt, die wenigstens ein Sauerstoff-, Schwefel-, Stickstoff- und/oder Phosphoratom enthält und in einer solchen Menge eingesetzt wird, dass das Molverhältnis von Elektronendonorverbindung und Mg/Al-Additionskomplex zwischen 0,01 und 2 und vorzugsweise zwischen 0,01 und 1 liegt;

– die Fällung wird unter Bewegung bei einer Temperatur zwischen 5 und 80°C durchgeführt.

2. Träger gemäss Anspruch 1, dadurch gekennzeichnet, dass das Verhältnis Dm/Dn der Teilchen zwischen 1,1 und 2,5 liegt.

3. Träger gemäss Anspruch 1, dadurch gekennzeichnet, dass das Verhältnis Dm/Dn der Teilchen zwischen 1,1 und 1,5 liegt.

4. Träger gemäss Anspruch 1, dadurch gekennzeichnet, dass das Verhältnis Dm/Dn der Teilchen zwischen 1,5 und 2,5 liegt.

5. Träger gemäss Anspruch 1, dadurch gekennzeichnet, dass mehr als 90 Masse-% der Teilchen der gleichen Partie im Bereich Dm±10% liegen.

6. Träger gemäss Anspruch 1, dadurch gekennzeichnet, dass die Teilchen eine glatte Oberfläche besitzen und eine spezifische Oberfläche von etwa 20 bis 60 m²/g (BET) aufweisen.

7. Träger gemäss Anspruch 1, dadurch gekennzeichnet, dass sie Mg-C-Bindungen enthalten und ihre Dichte zwischen 1,6 und 2,2 liegt.

8. Träger gemäss Anspruch 1, dadurch gekennzeichnet, dass sie keine Mg-C-Bedingungen enthalten und ihre Dichte zwischen 1,2 und 2,1 liegt.

9. Verfahren zur Herstellung der Träger gemäss Anspruch 1 durch Fällung eines Mg/Al-Additionskomplexes der Formel $R_1MgR_2, xAl(R_3)_3$, in der $R_1$, $R_2$ und $R_3$ gleiche oder verschiedene Alkylreste mit 2 bis 12 Kohlenstoffatomen darstellen und x zwischen 0,001 und 10 liegt, in einem flüssigen Kohlenwasserstoffmilieu mit einem Alkylchlorid, dadurch gekennzeichnet, dass diese Umsetzung unter folgenden Bedingungen durchgeführt wird:

– Es wird ein Alkylchlorid der Formel $R_4Cl$ eingesetzt, in der $R_4$ ein sekundärer oder ein tertiärer Alkylrest mit 3 bis 12 Kohlenstoffatomen ist, wobei das Molverhältnis von Alkylchlorid und Mg/Al-Additionskomplex zwischen $1,5(1+3/2 \cdot x)$ und $2,5(1+3/2 \cdot x)$ liegt;

– die Fällung wird in Anwesenheit einer Elektronendonorverbindung durchgeführt, die wenigstens ein Sauerstoff-, Schwefel-, Stickstoff- und/oder Phosporatom enthält und in einer solchen Menge eingesetzt wird, dass das Molverhältnis von Elektronendonorverbindung und Mg/Al-Additionskomplex zwischen 0,01 und 2 vorzugsweise zwischen 0,01 und 1 liegt;

– die Fällung wird unter Bewegung bei einer Temperatur zwischen 5 und 80°C durchgeführt.

10. Verfahren gemäss Anspruch 9, dadurch gekennzeichnet, dass als Elektronendonorverbindung ein aliphatischer Ether der Formel $R_5OR_6$ eingesetzt wird, in der $R_5$ und $R_6$ gleiche oder verschiedene Alkylreste mit 1 bis 12 Kohlenstoffatomen sind.

11. Verfahren gemäss Anspruch 10, dadurch gekennzeichnet, dass die Fällung unter Anwendung eines Molverhältnisses von Ether und Mg/Al-Additionskomplex zwischen 0,03 und 2 bei einer Temperatur zwischen 35 und 80°C durchgeführt wird.

12. Verfahren gemäss Anspruch 9, dadurch gekennzeichnet, dass die Fällung durchgeführt wird, indem fortschreitend das Alkylchlorid in das flüssige Kohlenwasserstoffmilieu, das den Mg/Al-Additionskomplex enthält, eingebracht wird.

13. Verfahren gemäss Anspruch 9, dadurch gekennzeichnet, dass die Fällung während der gesamten Reaktionsdauer unter konstanter Bewegung durchgeführt wird.

14. Verfahren gemäss Anspruch 12, dadurch gekennzeichnet, dass die Bewegungsgeschwindigkeit in dem Moment geändert wird, in dem die Menge des Alkylchlorids, die fortlaufend in das flüssige Kohlenwasserstoffmilieu eingebracht wird, in dem sich der Mg/Al-Additionskomplex befindet, einem Molverhältnis $R_4Cl/R_1MgR_2$, $xAl(R_3)_3 \leq 0,25$ entspricht.

15. Verfahren gemäss Anspruch 9, dadurch gekennzeichnet, dass die Fällung durchgeführt wird, indem in einer ersten Stufe der Mg/Al-Additionskomplex und das Alkylchlorid fortlaufend und gleichzeitig in solchen Mengen in das flüssige Kohlenwasserstoffmilieu eingebracht werden, dass maximal 50% der eingesetzten Mengen jedes Reaktionspartners eingeführt werden, worauf in einer zweiten Stufe zunächst schnell die restliche Menge an Mg/Al-Additionskomplex und anschliessend fortlaufend die restliche Menge an Alkylchlorid in das Reaktionsmilieu eingebracht werden.

16. Verfahren gemäss Anspruch 15, dadurch gekennzeichnet, dass die Fällung durchgeführt wird, indem die Bewegungsgeschwindigkeit zu einem beliebigen Zeitpunkt während der fortlaufenden und gleichzeitigen Einführung des Mg/Al-Additionskomplexes und des Alkylchlorids in das flüssige Kohlenwasserstoffmilieu geändert wird.

17. Verfahren gemäss Anspruch 9, dadurch gekennzeichnet, dass zur Herstellung von Trägern für Katalysatoren für die Polymerisation oder Copolymerisation von Ethylen oder Propylen ein Molverhältnis von Alkylchlorid und Mg/Al-Additionskomplex zwischen $1,85(1+3/2 \cdot x)$ und $1,95(1+3/2 \cdot x)$ angewandt wird.

18. Verfahren gemäss Anspruch 9, dadurch gekennzeichnet, dass zur Herstellung von Trägern für Katalysatoren für die Polymerisation oder Copolymerisation von Propylen ein Molverhältnis von Alkylchlorid und Mg/Al-Additionskomplex zwischen $1,95(1+3/2 \cdot x)$ und $2,2(1+3/2 \cdot x)$ angewandt wird.